# EUROPÄISCHE PATENTSCHRIFT

(11) **EP 0 938 844 B1**
(45) Veröffentlichungstag und Bekanntmachung des Hinweises auf die Patenterteilung: **13.06.2001**
(21) Anmeldenummer: 99103614.6
(22) Anmeldetag: 25.02.1999
(51) Int. Cl.: A21C 3/08

(54) **Brezelschlingsystem**
Pretzel-shaping system
Système à façonner de bretzels

(30) Priorität: 25.02.1998 DE 19807692
(43) Veröffentlichungstag der Anmeldung: 01.09.1999
(73) Patentinhaber: Bernhardt, Udo, 97346 Iphofen (DE); Karb, Erhard, 97357 Prichsenstadt (DE)
(72) Erfinder: Bernhardt, Udo, 97346 Iphofen (DE); Karb, Erhard, 97357 Prichsenstadt (DE)
(74) Vertreter: Götz, Georg, Dipl.-Ing.

(56) Entgegenhaltungen:
- DE-A- 4 411 742
- DE-A- 4 430 172
- DE-A- 19 508 964
- DE-A- 19 721 062
- DE-B- 1 288 532
- DE-C- 4 441 301
- DE-C- 19 511 409
- DE-U- 29 622 420
- US-A- 1 669 277
- US-A- 1 957 135
- US-A- 2 068 234

## Beschreibung

Die Erfindung betrifft eine Anordnung zur maschinellen Brezelnherstellung mit mehreren, zur Verarbeitung eines Teigstrangs zu einem Brezelrohling ausgebildeten Formeinheiten, gemäß erstem Teil/Oberbegriff des Patentanspruchs 1. Femer betrifft die Erfindung eine Zuführeinrichtung, die als Biege- und Längenmeßeinrichtung für die genannte Anordnung verwendbar ist.

Eine Brezel-Herstellungsanordnung etwa der vorgenannten Art ist aus US-A-1 957 135 bekannt. Eine der Formeinheiten befindet sich in der Teigaufnahmestellung, während eine weitere der Formeinheiten sich in der Brezelrohling-Abgabestellung befindet. Zur Teigaufnahme gelangen langgezogene Teigstränge auf eine Formplatte der Formeinheit, welche zur Bildung der U-Form entsprechend einem Haltesattel angeordnete Stifte aufweist. Ferner sind Greifmittel für die Teigstrangenden vorgesehen. Allerdings findet ein symmetrisches Ausrichten des Teigstranges, insbesondere bevor er in die Formeinheit und deren Formplatte gelangt, nicht statt. Der Nachteil besteht darin, dass die Reproduktionsgenauigkeit und Symmetrie der Brezelgestalt nach Durchlaufen des Prozesses nicht zuverlässig erreichbar ist.

Ein Verfahren und eine Anordnung zur Brezelformung ergibt sich aus der Auslegeschrift 1 288 532 des Deutschen Patentamts. Danach wird einem Teigstrang in einer Brezel-Formvorrichtung die Form von einem U erteilt, und zwar mit einem Mittelbogen, der zwei gerade, frei endende Schenkel verbindet Diese werden in einem weiterem Herstellungsschritt eingedrückt oder zusammengebogen, und zwar an einander gegenüberliegenden Stellen, die sich zwischen dem Mittelbogen und den freien Enden der Schenkel befinden (Ω - Form). Die zusammengebogenen Schenkel werden dann um etwa 360° miteinander verdreht oder verschlingt, wobei das Verschlingen der Schenkel an den zuvor eingedrückten Stellen erfolgt Die Schenkel mit den verdrehten Stellen werden dann auf den Mittelbogen geschwenkt oder geklappt, und die freien Schenkelenden auf den Mittelbogen gepreßt und geklebt Zur Durchführung dieses Verfahrens sind die Formeinheiten auf dem Mantelumfang einer sich stets in gleicher Richtung drehenden Trommel angeordnet. Der Teigstrang wird von einer Zuführeinrichtung in die Formeinheit übergeben, darin zum Brezelrohling weitergeformt und dann aus der Formeinheit herausgeworfen, wobei er auf einer Abführeinrichtung mit der Seite nach unten zum Aufliegen kommt, auf die die freien Schenkelenden gepreßt oder geklebt sind. Soll die Produktionsgeschwindigkeit erhöht werden, muß die Winkelgeschwindigkeit der die Formeinheiten auf dem Außenmantel tragenden Trommel hochgefahren werden, wobei allerdings die Teigstrangstücke einer stark ansteigenden Fliehkraft ausgesetzt sind. Diese kann zum Herausfliegen und zur Deformation des Teigstrangs sowie unerwünschten Ungenauigkeiten in der Gestalt des Brezelrohlings führen. Zudem ist die Verfahrzeit der Formeinheiten zwischen der Zuführ- und Abführstation abhängig von der Drehzahl und insbesondere vom Radius der die Formeinheiten auf dem Außenmantel tragenden Verfahrtrommel. Soll diese viele Formeinheiten zur Steigerung der Produktionsgeschwindigkeit bewegen, muß zwangsläufig der Radius der Verfahrtrommel und damit die Totzeit der Formeinheiten auf dem Weg von der Abführ- zur Zuführstation erhöht werden. Dies vermindert die Auslastung der einzelnen Formeinheiten und damit die Gesamteffizienz der Brezelschlingmaschine.

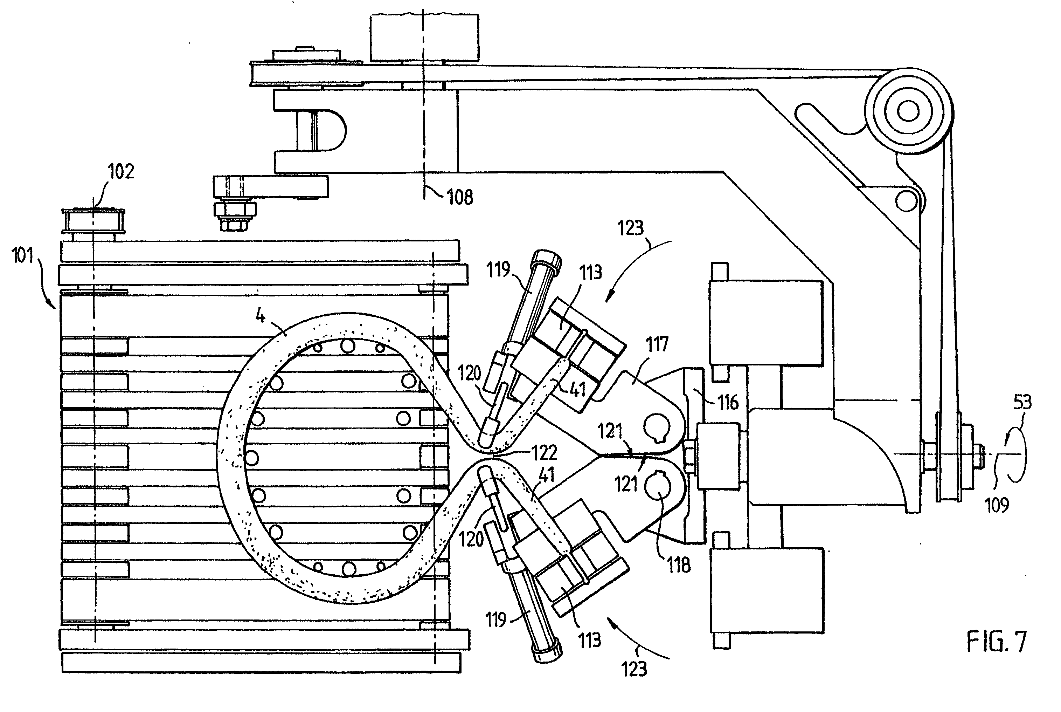

Bekannt ist aus DE-A 44 30 172 eine Einrichtung zur Herstellung von Brezeln mit einer Schlingmaschine. Zum Schlingprozeß sind mehrere separate Formtische mit Hängesattel sowie Creifereinheiten erforderlich. Die mehrfache Übergabe zwischen den einzelnen Formtischen und Greifereinheiten führt unweigerlich zur Deformation des Teigstrangs und damit zur Verschlechterung der Qualität des hergestellten Brezelrohlings. In der dortigen Figur 7 ist ein vertikal verstellbarer Formtisch als Aufnahmeplatte 15 mit Hängesattel offenbart. Die vertikale Verstellbarkeit dienst zur Ansteuerung einer Lichtschranke 16, die daraufhin ein Schließsignal zum Erfassen des Stranges für einen Greifer in einem definierten Abstand vom Strangende generiert. Die Vertikalbewegung der Aufnahmeplatte 15 nach oben wird in einer vorbestimmten Position beendet, in welcher der Teigstrang eine Soll-Länge hat.

Aus DE-C-41 05 254 ist eine Vorrichtung zum Schlingen einer Brezel aus einem geraden Teigstrang definierter Länge ersichtlich. Insbesondere in dortigen Figuren 12, 13 und 14 ist ein Formtisch mit mehreren nebeneinander verlaufenden, unterschiedlich breiten Förderbändern offenbart. Zwischen diesen springen einen Hängesattel für den Teigstrang bildende Anlegemarken 40 nach oben. Zur Freigabe und zum Weitertransport des Teigstrangs können diese Anlegemarken 40 wieder mittels eines Pneumatikzylinders 42 nach unten versenkt werden, damit ohne Behinderung die fertig geschlungene Brezel 29 abgefördert werden kann.

Bei einer weiteren, bekannten Vorrichtung zum Herstellen von Brezeln (DE-C-44 41 301) ist ein Greifer mit zwei Klemmbacken (vgl. dortige Ziffern 36, 36' in Figur 4a und 4b) eingesetzt. Der Greifer ist mit einem Andrücker 37 versehen, der zwischen den beiden Klemmbacken 36, 36' des Greifers in senkrechter Richtung verschiebbar ist, um das abgesetzte Ende des Teigstrangs auf den darunterliegenden Abschnitt des Mittelteils des U-förmig gebogenen Teigstrangs zu drücken. Dieser Greifer entspricht dem eingangs genannten Greiforgan.

DE-A-44 32 162 offenbart eine Brezel-Formstation, bei welcher der Formvorgang in einer Formstation mittels Rotation um eine Mittelachse erfolgt, wobei der Teigstrang von einer Förderstation aus zugeführt wird.

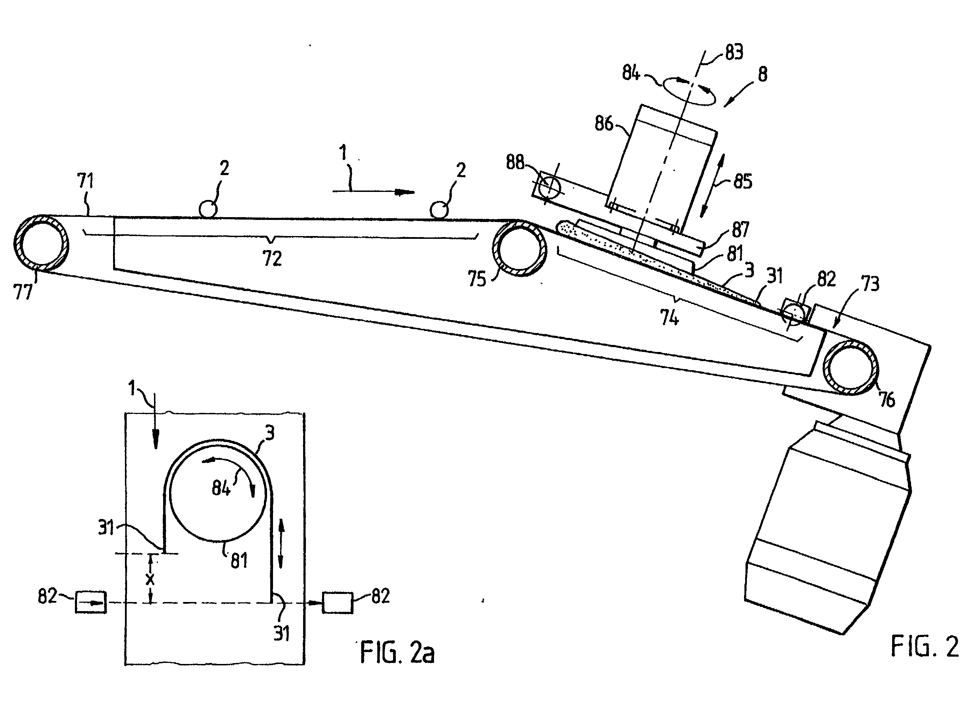

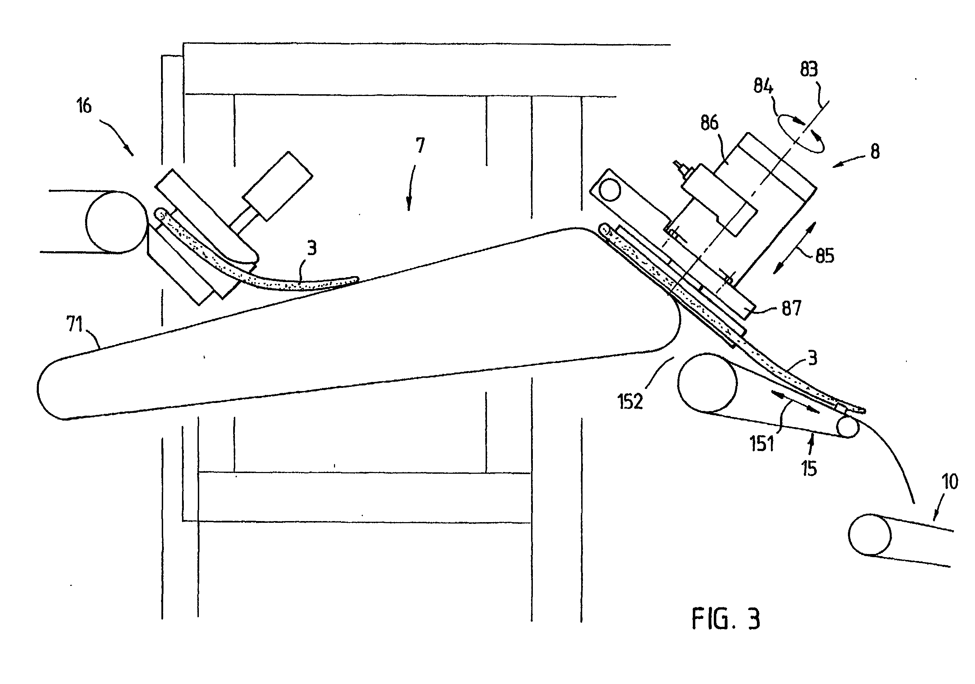

Zur Herbeiführung der Verformung eines Teigstrangs zu einem U im Rahmen einer Herstellung eines Brezelrohlings ist es bekannt (DE-C-195 11 409), eine frei drehbare Scheibe (dortige Bezugsziffer 5) einzusetzen, die während eines Vorschubs eines Arbeitsbandes auf diesem anliegt. Die frei drehbar aufgehängte Scheibe 5 bewirkt die Verformung des Teigstrangs und wird durch eine Kolbenstange 7 aus einer in dortiger Figur 2 gezeigten Anfangsstellung in eine in dortiger Figur 3 gezeigten Endstellung verfahren.

Schließlich ist aus DE-U-296 20 893 eine Brezelschlingmaschine bekannt, bei der zur Bildung der U-Form aus einem Teigstrang eine Form- und Vorpositionierstation (dortige Bezugsziffer 2) angeordnet ist und eine von einem Transportband abhebbare und darauf aufsetzbare Positionierscheibe 22 aufweist, mit welcher dem Teigstrang die U-Form erteilt wird.

Gegenüber dem Stand der Technik stellt sich die der Erfindung zugrunde liegende Aufgabe, bei der Herstellung von Brezelrohlingen die Qualität und Reproduzierbarkeit der Brezelgestalt zu verbessern sowie die Produktionsgeschwindigkeit und auch die sonstige Herstellungseffizienz zu erhöhen. Gleichzeitig soll eine hohe Zuverlässigkeit der Bewegungsabläufe, verbunden mit maximaler Geschwindigkeit und höher Präzision unter optimaler Teigschonung gewährleistet sein.

Zur Lösung wird die im Patentanspruch 1 gekennzeichnete Herstellungsanordnung für Brezelrohlinge vorgeschlagen.

Der erfindungsgemäße Vorschlag bei der Brezelrohling-Herstellung umfaßt das Merkmal, zwei Formeinheiten miteinander komplementär zu koordinieren und sich gegenseitig so ergänzen zu lassen, daß die Teigstrang-Zuführeinrichtung mit hoher Beschikkungsrate arbeiten kann. Bei der Übernahme eines Teigstrangs von der Zuführeinrichtung wechseln zwei aufeinander im Gegentakt direkt bezogene Formeinheiten ständig miteinander ab. Während die eine Formeinheit unmittelbar nach der Übernahme eines Teigstrangs zur Abführeinrichtung bewegt wird und während dieser Bewegungsphase den Teigstrang zum Brezelrohling mit typischer Gestalt umformt, erfolgt bei der anderen Formeinheit der genau komplementäre bzw. umgekehrte Vorgang, nämlich die Rückkehr von der Abführeinrichtung zur Zuführeinrichtung wobei diese Formeinheit wieder in den Ausgangszustand zur Übernahme und Verarbeitung eines weiteren Teigstrangs versetzt wird. In Abkehr vom nächstliegenden Stand der Technik, bei welchem mehrere Formeinheiten sequentiell bzw. in Reihe nacheinander erst an einer Zuführeinrichtung und dann an einer Abführeinrichtung vorbeibewegt werden, werden nach der Erfindung die beiden Formeinheiten von der Zuführeinrichtung zur Abführeinrichtung und umgekehrt jeweils unmittelbar, das heißt ohne Vor- oder Nachordnung weitere Formeinheiten geführt. Die Bewegungsabläufe und Zustandsveränderungen der ein zusammenwirkenden Gegentakt-Paar bildenden Formeinheit erfolgen dabei im komplementären Parallelbetrieb.

Ein weiterer, mit der Erfindung erzielbarer Vorteil besteht darin, daß mit der fast minimalen Anzahl von zwei Formeinheiten eine äußert schnelle Teigstrang-Abnahme und -verarbeitung durchgeführt werden kann, während nach dem nächstliegenden Stand der Technik aufgrund begrenzter Trommeldrehzahl zur Erhöhung der Effizienz weit mehr als zwei Formeinheiten eingesetzt werden müßten, was aber andererseits zu einer komplizierten Steuerungskonstruktion und zu einem hohen Geräte- und Teileaufwand führt, verbunden mit Erhöhung der Ausfallwahrscheinlichkeit.

Zweckmäßig ist im Rahmen der Erfindung eine synchrone Betriebsweise der beiden aufeinander bezogenen Formeinheiten, was mit Zahnrad- und Zahnriemengetriebe und einem einzigen Antriebsmotor oder auch einer Mehrzahl von Antriebsmotoren erreicht werden könnte, die über ein Bussystem und ein "elektronisches Getriebe" aufeinander abgestimmt sind. Die Verwendung nur eines Motors hat den Vorteil, daß sich bei Ausfall Kollisionen zwischen bewegten Teilen leichter vermeiden lassen.

Damit der Transport einer Formeinheit von der Zuführ- zur Abführeinrichtung möglichst kurz und zeitsparend erfolgen kann, wird erfindungsgemäß vorgeschlagen, daß bereits vor dem Verlassen der Aufnahmestellung in der jeweiligen Formeinheit dem Teigstrang eine U-Form mit zwei frei endenden Schenkeln und einem diese verbindenden Mittelabschnitt erteilt wird.

Mit oder nach dem Verlassen kann der weitere, oben bei der Würdigung des Standes der Technik angegebene Schlingprozeß erfolgen, der dann erfindungsgemäß rechtzeitig bis zu Erreichen der Abgabestellung abgeschlossen wird. Dabei ist mit der Erfindung die besonders vorteilhafte, die Produkionsgeschwindigkeit beschleunigende Möglichkeit eröffnet, das Schlingen der Teigstrangenden um die erste Achse und das Schwenken oder Klappen derselben um die zweite Achse auf den Teigstrang-Mittelabschnitt gleichzeitig und/oder einander überlagert durchzuführen.

Während beim Stand der Technik die Formeinheit satellitenartig um die Drehachse der Trommel bewegt werden, die parallel zur Schwenk- oder Klappachse der Teigstrangenden verläuft, wird gemäß einer vorteilhaften Erfindungsausbildung davon abgegangen: Die gemeinsame Bewegungs-Symmetrieachse für die Formeinheiten verläuft senkrecht zur zweiten Schwenkachse sowie schräg oder senkrecht zur erstgenannten Schlingachse jeweils für die Teigstrangenden. Indem vor allem die gemeinsame Achse senkrecht zur Schwenk- und Klappachse verläuft, mittels welcher die Teigstrangenden auf dem Teigstrang-Mittelteil angebracht werden, ist verhindert, daß sich hohe Bewegungs- bzw. Stellgeschwindigkeiten für die Formeinheiten in Fliehkräfte umsetzen, welche die Teigstränge aus den Formeinheiten herausschleudem. Etwaige, durch Stellbewegungen entstehende Fliehkräfte führen bei dieser Verfahrensweise lediglich dazu, daß der Teigstrang an die Seitenwandungen von Halterungselementen der Formeinheit anliegt und dabei nicht nur sicher gehalten ist Zudem führen bei der erfindungsgemäßen Anordnung die Fliehkräfte zu einer vorteilhaften Straffung des Schlingknotens.

Die erfindungsgemäße Anordnung der Formeinheiten auf dem Verfahrgestell ermöglicht es, einen fertig zum Brezelrohling geschlungenen Teigstrang an die Abführeinrichtung abzugeben, während die andere Formeinrichtung einen U-förmigen Teigstrang von einem Förderer der Zuführeinrichtung aufnimmt. Mit einer derartigen Vorrichtung lassen sich Stückzahlen von zweitausend Brezeln pro Stunde und mehr erreichen, wobei das Greifen, Schlingen und Ablegen der Teigstrangenden kontrolliert und mit hoher Präzision erfolgt. Auf der Basis der erfindungsgemäßen Brezelrohlings-Herstellungsanordnung nimmt die eine Formeinrichtung einen Teigstrang auf, während die ihr gegenüber komplementär bzw. im Gegentakt arbeitende zweite Formeinrichtung sich zur Abgabe des fertig geformten Brezelrohlings an der Abführeinrichtung befindet.

Die Durchführbarkeit dieses Gegentaktbetriebs fördert es, wenn die Formeinheiten zueinander möglichst in jedem Zeitpunkt punktsymmetrisch liegen. Durch diesen Symmetriepunkt kann die Symmetrie- und Drehachse eines rotierbaren Drehgestells verlaufen, auf dem die Formeinheiten angeordnet sind. Mit besonderem Vorteil verläuft diese Drehachse vertikal und/oder senkrecht zu einer etwaigen gemeinsamen Ebene der Formeinheit und/oder zur einer von der Formeinheit für die Teigstrang-Endabschnitte realisierten Schling- und/oder Umklappachse. Dadurch lassen sich vorteilhaft die bereits oben angesprochenen, unerwünschten Fliehkraftauswirkungen vermeiden. Mit der Anordnung der Formeinheiten weitgehend in einer gemeinsamen Ebene des Drehgestells wird eine einfache Konstruktionsweise begünstigt.

Die Reproduktionsgenauigkeit für die Gestalt der Brezelrohlinge sowie die Teigschonung läßt sich mit einer vorteilhaften Ausbildung der Erfindung dahingehend noch weiter steigern, daß die Zu- und Abführeinrichtungen sowie die Formeinheiten mit jeweils in der Aufnahme- oder Abführposition aneinander anschließenden Förderbändern realisiert sind. Von einem Förderband zum anderen kann der Teigstrang oder der Brezelrohling schonend und ohne Erschütterungen oder Beschädigungen übergeben werden.

In einer weiteren vorteilhaften Ausbildung der erfindungsgemäßen Anordnung ist die Zuführeinrichtung mit einer Strang-Längenmeßeinheit und einer StrangBiegeeinheit versehen, die zum symmetrischen Ausrichten der Teigstränge gemäß einer U-Form miteinander in Wirkverbindung stehen. Um dabei zu lange oder zu kurze Teigstränge aussortieren zu können, ist die Anordnung eines Teigstrang-Auswerforgans, beispielsweise eines in zwei Richtungen ansteuerbaren Förderbandes, zweckmäßig. Die Richtung dieses Auswerf-Förderbandes läßt sich von der Strang-Längenmeßeinheit bestimmen, die in Verbindung mit einer Steuer- oder Recheneinheit die gemessene Stranglänge mit eingegebenen Längenvorgaben und Geometrien vergleicht.

Im Rahmen der allgemeinen erfinderischen Idee liegt auch eine als Biege- und Längenmeßeinrichtung verwendete Zuführeinrichtung, die zum Einsatz in der erfindungsgemäßen Anordnung geeignet ist. Damit kann vorteilhaft vor der Schlingung des Teigstrangs die Positionierung mittels eines drehbar angetriebenen Richtrades erfolgen,woran ein auf einem Förderband bewegter Teigstrang zur Anlage kommt. Anschließend wird der Teigstrangs mittels des Richtrades in eine Richtung gedreht, bis ein Teigstrangende einen Erkennungssensor passiert, der ein eine erste Endposition definierendes Signal auslöst. Dann wird das Richtrad mit dem daran anliegenden Teigstrang in die andere Richtung gedreht, bis das andere Ende des Teigstrangs einen weiteren Sensor ansprechen läßt, wodurch ein eine zweite Endposition definierendes Signal ausgelöst wird. Die Signale werden einer Steuereinrichtung zugeführt, die den Antriebsmotor für das Richtrad kontrolliert. Im weiteren Schritt wird das Richtrad um die Hälfte seines gesamten Drehwinkels zwischen den beiden Endpositionen der beiden Teigstrangenden zurückgedreht, wodurch eine symmetrische U-Form ausgebildet wird und an die Formeinheit übergeben werden kann. Zur Zählung des Drehwinkels ist dem Richtrad ein Winkelgeber zugeordnet, der ausgangsseitig mit der Steuereinheit verbunden ist, welche den Antriebsmotor des Richtrades zur Realisierung der beiden Endpositionen und der symmetrischen Mittelstellung ansteuert.

So lassen sich in einfacher Weise symmetrische U-Formen für die Teigstränge ausbilden, deren U-Schenkel zwischen sich eine konstante Breite definieren.

Dadurch läßt sich eine erhebliche Vereinfachung der weiteren Verarbeitung erzielen, da die Formeinheit und Greifmittel ebenfalls symmetrisch ausgebildet sein können. Das Ordnen von unterschiedlich langen und auf der Zuführeinrichtung quer zur Fördereinrichtung versetzt liegenden Teigsträngen läßt sich mit dem genannten Verfahren sehr einfach, zuverlässig und schnell durchführen. Durch die räumliche Trennung der U-Positionierung auf der Zuführeinrichtung einerseits und des Schlingens auf der Formeinheit andererseits wird eine weitere, effiziente Arbeitsteilung erreicht. Der Zeitaufwand für die Herstellung der Brezelrohlings läßt so weiter reduzieren. Während nämlich ein übergebener U-förmiger Teigstrang mittels der Formeinheit zu einer Brezel geschlungen wird, wind gleichzeitig auf der Zuführeinrichtung der Teigstrang U-förmig mit symmetrischer Grundgestalt ausgerichtet Aufgrund dieser zeitgleich ablaufenden Formprozesse wird insgesamt die Herstellungszeit für den Brezelrohling verringert.

In einer weiteren vorteilhaften Ausbildung der erfindungsgemäßen Anordnung ist das Drehgestell mit den beiden Formeinheiten vorzugsweise um 180 ° um eine schräg oder senkrecht zu der Schling- oder Klappachse des Greiforganverbandes angeordnete Bewegungsachse ausgebildet Hierdurch ist es möglich, die Zuführ- und die Abführeinrichtung räumlich getrennt anzuordnen und modulartig zu gestalten. Aufgrund des Drehgestelleinsatzes für die Formeinrichtungen sind selbstverständlich auch andere Anordnungen von Zu- und Abführeinrichtungen als längs in einer Richtung einander gegenüberliegend möglich. Beispielsweise können aufgrund räumlicher Verhältnisse die Zu- und Abführeinrichtungen in einem rechten Winkel zueinander angeordnet sein, wobei dann das Drehgestell reversierend einen Drehwinkel von 90 ° bzw. 270 ° anstelle von jeweils 180 ° ausführt.

Von besonderem Vorteil ist es, wenn bei der erfindungsgemäßen Anordnung die Zu- und Abführeinrichtung einander gegenüberliegend angeordnet sind. So können zwei auch einander gegenüberliegende Formeinrichtungen im Gegentakt arbeiten und sich ergänzen. Während die eine Formeinheit einen Teigstrang von der Zuführeinrichtung aufnimmt, übergibt die andere Formeinheit einen fertig geschlungenen Brezelrohling an die Abführeinrichtung. Eine gegenüberliegende Anordnung von Zu- und Abführeinrichtung erleichtert auch den Aufbau und die Ausführung der Anordnung der Formeinheiten auf dem Verfahr-, insbesondere Drehgestell.

Weitere Einzelheiten, Merkmale, Vorteile und Wirkungen auf der Basis der Erfindung ergeben sich aus der nachfolgenden Beschreibung bevorzugter Ausführungsformen der Erfindung sowie den Zeichnungen. Diese zeigen in:
- Figur 1: eine erfindungsgemäße Brezelschlingmaschine in der Seitenansicht nebst den zugehörigen Teigverarbeitungsschritten a) - e),
- Figur 2: die Zuführeinrichtung gemäß Figur 1 in vergrößerter Seitenansicht,
- Fig. 2a: eine schematische Draufsicht auf die Richteinheit
- Figur 3: eine abgewandelte Ausbildung der Zuführeinrichtung mit Auswurforgan in entsprechender Seitenansicht,
- Figur 4: das Drehgestell mit Formeinheiten gemäß Figur 1 in vergrösserter Seitenansicht,
- Figur 5: eine Draufsicht auf eine Formeinheit für die Brezelschlingmaschine nach Figur 1,
- Figur 6: eine entsprechende Draufsicht auf die Formeinheit mit angehobenem Formtisch und geschlossenen Greiforganen,
- Figur 7: eine entsprechende Draufsicht auf die Formeinheit mit nach außen geschwenkten Greiforganen zur Bildung der Ω-Form,
- Figur 8: das erfindungsgemäße Greiforgan in Längsseitenansicht, teilweise axial geschnitten mit geöffneten Klemmbacken,
- Figur 9: eine entsprechende Ansicht auf das Greiforgan gemäß Figur 8 mit geschlossenen Klemmbacken und
- Figur 10: das vorgenannte Greiforgan in entsprechender Ansicht mit geöffneten Klemmbacken und ausgefahrenem Zug- und Druckelement.

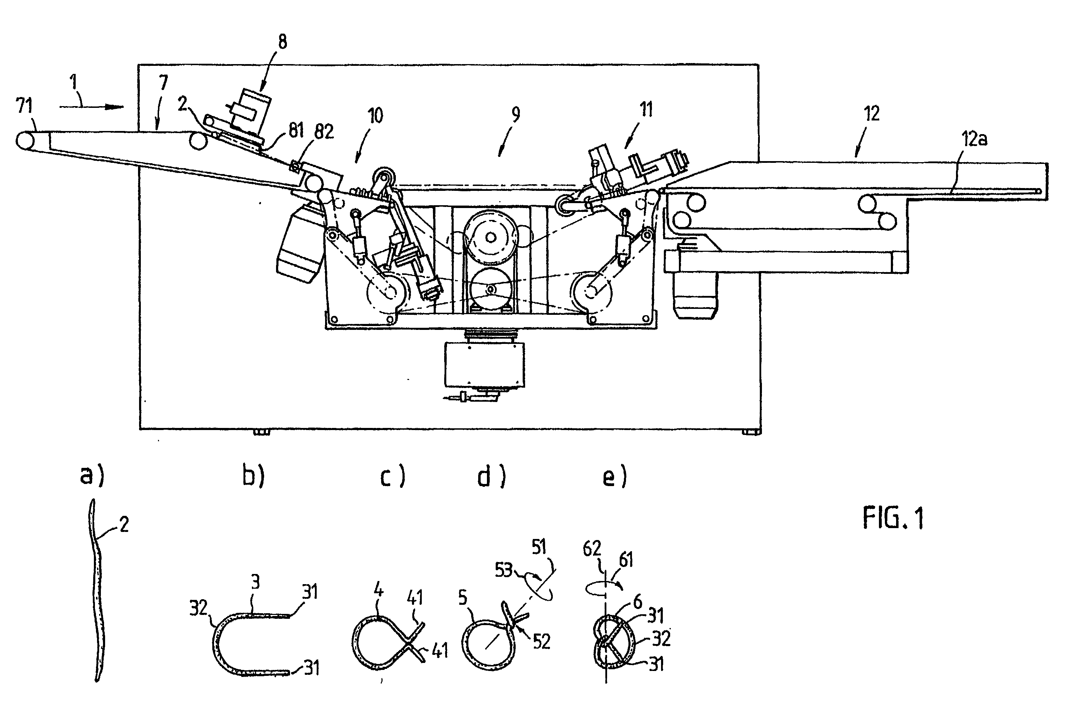

Gemäß Figur 1 sind bei der erfindungsgemäßen Brezelschlingmaschine bezüglich der Transport- und Förderrichtung 1 für querliegende Teigstränge 2, U-förmige Teigstränge 3, Ω-förmige Teigstränge 4, geschlossene Schlingteigstücke 5 und fertig geformte Brezelrohlinge 6 folgende Maschinenaggregate in Reihe hintereinander angeordnet: Zuführeinrichtung 7 mit Richteinheit 8, Drehgestell 9 mit einer ersten Formeinheit 10 und einer zweiten Formeinheit 11, sowie einer Abführeinrichtung 12. Die Wirkungsweise dieser Reihenanordnung ist anhand der darunter gezeichneten Verfahrensschritte a) - e) mit unterschiedlichen Teigformen veranschaulicht: Auf dem Förderband 71 der Zuführeinrichtung 7 werden in Querrichtung Teigstränge 2 abgelegt, die noch einen geschlängelten Verlauf aufweisen, in ihren Längen voneinander abweichen sowie in Förderbandquerrichtung gegeneinander versetzt liegen können. Die Richteinheit 8 weist ein vom Förderband 71 abhebbares Richtrad 81 auf, um das sich die angelieferten Teigstränge 2 unter Verformung zu U-förmigen Teigsträngen 3 legen. Die Richteinheit 8 weist ferner eine Sensorik 82 zur Erkennung der Schenkelenden 31 des U-förmigen Teigstrangs 2 auf; durch Hin- und Herdrehen des Teigstrangs mittels des Richtrads 81 in Verbindung mit einer (nicht) gezeichneten Steuer- und Recheneinheit läßt sich eine symmetrische Ausrichtung des U-förmigen Teigstrangs 3 erreichen, wie mit Verfahrensschritt b) bezeichnet. Im nächsten Prozeßschritt der Teigverarbeitung wird mittels der Formeinheit 10, 11, die gerade an der Zuführeinrichtung 7 ansteht, dem U-förmigen Teigstrang eine Form erteilt, die zu dem Ω-förmigen Teigstrang 4 mit abgespreizten Endabschnitten 41 führt (Verfahrensschritt c). Diese werden von Greiforganen (siehe unten) auf den Formeinheiten 10, 11 erfaßt und um eine Schlingachse 51 um etwa 360 ° miteinander verzwimt oder verschlungen, wobei der Schlingknoten 52 entsteht (Verfahrensschritt d). Parallel zur Schlingbewegung 53 wird in der Formeinheit 10, 11 durch die Greiforgane auch eine Umklappbewegung 61 um eine Klappachse 62 durchgeführt; mittels der Umklappbewegung 61 werden die Schenkelenden 31 auf den Mittelteil 32 des (ehemals) U-förmigen Teigstrangs aufgesetzt (Verfahrensschritt e).

Gemäß Figur 2 setzt sich die die Teigstränge 2, 3 tragende Oberseite des Zuführförderbands 71 aus einem weitgehend horizontalen Abschnitt 72 und einem zum Ausgang 73 der Fördereinrichtung hin geneigten Schrägabschnitt 74 zusammen. Innerhalb letzterem ist die Richteinrichtung 8 mit dem Richtrad 81 angeordnet, welches um eine senkrecht auf den Schrägabschnitt 74 aufstehende Drehachse 83 in hin- und hergehende Drehungen 84 versetzbar ist. Zudem können der Richteinheit 8 einschließlich dem Richtrad 81 Aufsetz- und Abhebebewegungen 85 erteilt werden, damit ein U-förmig gebogener und symmetrisch ausgerichteter Teigstrang 3 unterhalb des Richtrades 81 hindurch zum Ausgang 73 der Fördereinrichtung gelangen kann. Zur Herbeiführung der Drehbewegung 84 und der Bewegung 85 sind entsprechend ausgestaltete Antriebsmittel 86 vorgesehen, die von einer nichtgezeichneten Steuer- und Recheneinheit kontrolliert werden. Die Auf- und Absetzbewegung 85 läßt sich auch mit einer Schwenkbewegung einer Schwenkplatte 87 realisieren, die über eine Schwenkachse 88 angelenkt ist.

Entsprechend einer vorteilhaften Ausbildung ist das Richtrad 81 mit einem sich kegelstumpfartig abschrägenden bzw. verjüngenden Außenumfang gestaltet. Die Verjüngung nimmt mit zunehmender Entfernung vom Förderband 71 zu. Dadurch wird ein zu positionierender Teigstrang 2 vom Richtrad etwas angehoben, so daß Reibungskräfte zwischen dem Förderband 71 und dem Teigstrang 2, 3 reduziert werden. Damit der Vorteil erzielt, daß der Teigstrang leichter und damit schneller auf dem Förderband 71 ausgerichtet wird und darüber hinaus verformungsfrei bleibt. Weiterhin wird verhindert, daß der Teigstrang unter das Richtrad 81 gezogen wird. Zur Verminderung der Reibungskräfte trägt ferner der Schrägabschnitt 74 des Förderbands 71 bei, der von dessen zweiter und dritter Förderrolle 75, 76 definiert ist. Der bereits genannte horizontale Abschnitt 72 wird von der ersten Förderrolle 77 und der zweiten Förderrolle 75 definiert.

Wie auch aus Figur 2 a hervorgeht, erfolgt die Positionierung eines am Richtrad 81 angelangten Teigstrangs 3 derart, daß der Teigstrang mit dem Richtrad zunächst beispielsweise entgegen dem Uhrzeigersinn bewegt wird, bis die Erkennungssensorik 82, beispielsweise eine Lichtschranke, ein Teigstrangende 31 detektiert. Infolge des entsprechenden Sensorsignals bewirkt die Steuer- oder Recheneinheit eine Drehung des Richtrades 81 nun im Uhrzeigersinn, bis das andere Teigstrang- bzw. Schenkelende 31 die Sensorik bzw. Lichtschranke 82 unterbricht, die daraufhin mit der Erzeugung eines weiteren Sensorsignals an die Steuer- oder Recheneinheit anspricht. Die erste Umdrehung entgegen dem Uhrzeigersinn hat zur Festlegung der Referenz gedient. Die zweite Umdrehung erfolgt dann um den Weg x, bis das zweite, andere Teigstrangende 31 die Lichtschranke 82 durchbrochen hat. Um nun eine symmetrische U-Form 3, wie in Figur 1 unter b) dargestellt, zu erzielen, braucht die Steuer- und Recheneinheit in Verbindung mit einem Winkelzähler die Antriebsmittel 86 nur soweit anzusteuern, daß die Teigstrangenden 31 lediglich den Weg x/2 zurücklegen, was die Hälfte des gesamten Drehwinkels zwischen den beiden signalauslösenden Positionen der Teigstrangenden 31 entspricht. Zur Freigabe des symmetrischen Teigstrangs 3 und dessen weiterer Bearbeitung wird das Richtrad 81 nun nach oben bewegt, beispielsweise um die Schwenkachse 88 in die Abhebebewegung 85 versetzt.

Ferner läßt sich mittels der genannten Meßanordnung auch die Gesamtlänge des jeweiligen Teigstrangs ermitteln, wenn der Recheneinheit der Durchmesser des Richtrads sowie der Abstand zur Erkennungssensorik 82, beispielsweise zur Lichtschranke, eingegeben ist. Über den zurückgelegten Drehweg läßt sich dann die Ge-samtlänge anhand der genannten geometrischen Parameter ausrechnen und für etwaige, weitere Steuerungszwecke verwenden.

So ist es gemäß Figur 3 möglich, zu kurze oder zu lange Teigstränge 2, die aus einem vorgegebenen Toleranzband herausfallen, aus dem weiteren Verarbeitungsprozeß zu entfernen. Dazu dient ein Auswurfförderband 15, das zwischen der Zuführeinrichtung 7 und dem Drehgestell 9 mit den beiden Formeinheiten 10, 11 gemäß einer besonderen Ausbildung der Erfindung angeordnet sein kann. Dieses ist durch nicht gezeichnete Antriebsmittel in seiner Förderrichtung 151 umkehrbar. Sind die Teigstränge zu kurz oder zu lang, wird die Förderrichtung 15 so eingestellt, daß Teigstränge 3 zu dem Auswurfspalt 152 zwischen dem Förderband 71 der Zuführeinrichtung 7 und dem niedriger angeordneten Auswurfförderband 15 transportiert werden. Liegen die Teigstranglängen in der Toleranz, wird die Richtung des Auswurfförderbands so eingestellt, daß herabfallende U-förmige Teigstränge 3 von der Richteinheit 8 bzw. der Zuführeinrichtung 7 übernommen werden und zum Drehgestell 9 mit den Formeinheiten 10, 11 weitertransportiert. werden können.

Ferner ist in Figur 3 die Möglichkeit angedeutet, eine Vorformstation 16 zur Herstellung U-förmiger Teigstränge 3 anzuordnen.

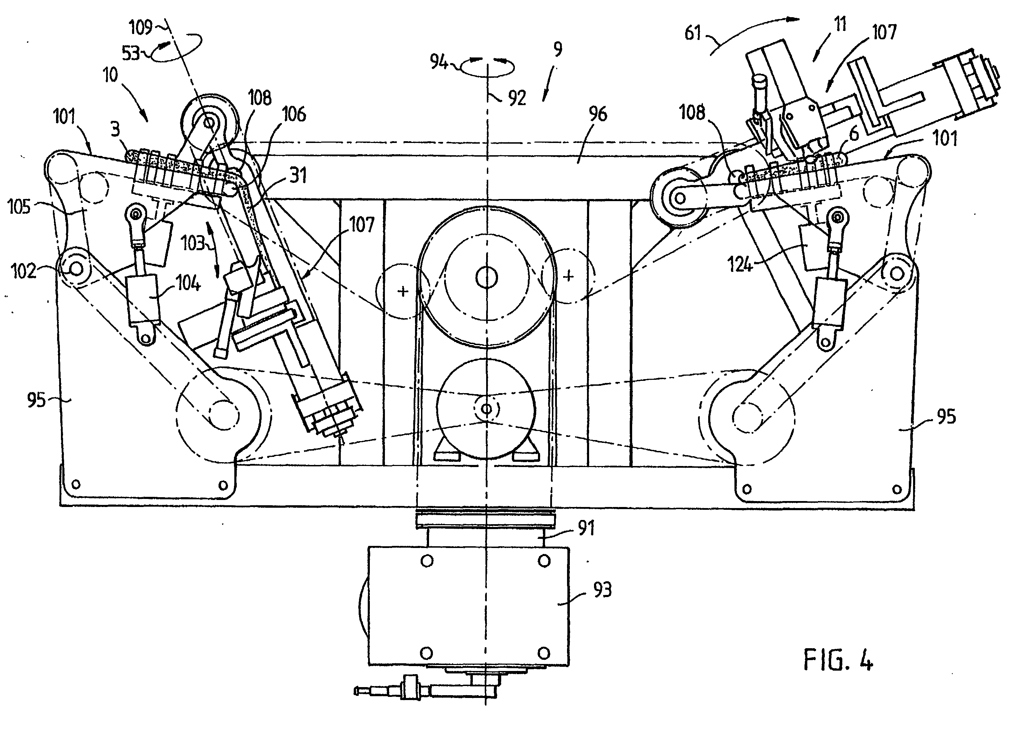

Gemäß Figur 4 ist das Drehgestell 9 auf einer Drehlagerung 91 um eine Drehachse 92 mittels eines Antriebsmotors 93 vorzugsweise reversierend bzw. mit wechselnden Richtungen der Drehbewegungen 94 beweglich angeordnet. Auf jeweilige Stirnwandungen 95 sind die erste Formeinheit 10 und die zweite Formeinheit 11 bezüglich einer durch die Drehachse 92 verlaufenden Ebene (senkrecht zur Zeichenebene der Figur 4) gegenüberliegend und gelenkig verstellbar angebracht. Die erste Formeinheit 10 befindet sich gerade in der Aufnahmeposition gegenüber der Zuführeinrichtung, während die bezüglich der genannten Ebene symmetrisch gegenüberliegende Formeinheit 11 sich gerade in der Abgabeposition bezüglich der Abführeinrichtung (12 in Figur 1) befindet. Durch die einander symmetrisch gegenüberliegende Anordnung der beiden Formeinheiten ist gewährleistet, daß sich immer eine in der Abgabeposition befindet, während die andere in die Aufnahmeposition verstellt ist. Die beiden Formeinheiten 10, 11 sind jeweils mit einem Formtisch 101 versehen, der an der jeweiligen Stirnwandung 95 über eine (senkrecht zur Zeichenebene verlaufende) Schwenkachse 102 angelenkt ist. Die Verschwenkung 103 des Formtisches 101 läßt sich mittels eines linear ein- und ausfahrbares Schwenkzylinders 104 herbeiführen, der einerseits gegen die Stirnwandung 95 des Drehgestells 9 und andererseits gegen die Seitenwandung 105 des Formtisches 101 abgestützt ist. Die Schwenkachse 102 ist gegenüber der Oberseite des Formtisches 101 soweit nach unten verlagert, daß die freie Endkante 106 des Formtisches 101 in ihrer Schwenkbahn bezüglich einer Ebene weitgehend tangential verläuft, die von den herabhängenden Schenkel-Endabschnitten 31 des U-förmigen Teigstrangs 3 auf dem Formtisch 101 aufgespannt ist. Damit ist erreicht, daß beim Verschwenken 103 des Formtisches 101 die Schenkelendabschnitte 31 des U-förmigen Teigstrangs 3 nur minimal ausgelenkt und insbesondere nicht aus dem Schlinggerät 107 herausgeschwenkt werden, das einen weiteren wesentlichen Bestandteil der jeweiligen Formeinheit 10, 11 bildet. Es kann über eine Klappachse 108, die etwa parallel zur Schwenkachse 102 des Formtisches 101 verläuft, entweder in eine Stellung unterhalb der Formtischendkante 106 verschwenkt (siehe in Figur 4 die Stellung der ersten Formeinheit 10 links von der Drehachse 92) oder in Richtung der Oberseite des Formtisches 101 geklappt werden (vgl. die Stellung der zweiten Formeinheit 11 rechts der Drehachse 92 in Figur 4). in der letztgenannten Stellung schließt das Schlinggerät 107 mit dem Formtisch 101 einen spitzen Winkel ein, wobei der oben genannte Verfahrensschritt e) - Andrücken der Schenkelenden 31 auf das Teigstrangmittelteil 32 - vollzogen wird. Dabei entspricht die Klappachse 108 der in Figur 1, Verfahrensschritt e) gezeigten Klappachse 62 zur Fertigstellung des Brezelrohlings 6. Die Stellung der ersten Formeinheit 10 (in Figur 4 links der Drehachse 92) entspricht den in Figur 1 gezeigten Verfahrensschritten b) oder c).

Gemäß Figur 4 sind die beiden identisch konstruierten Formeinheiten 10, 11 über ein Tragwerk 96 der Dreheinheit 9 derart miteinander verbunden, daß bei Drehung 94 des Drehgestells 9 beide gleichsam wie Satelliten um die Drehgestelldrehachse 92 kreisen. Dabei wird bei der ersten Formeinheit 10, während diese von der Aufnahmeposition gemäß linker Hälfte in Figur 4 in die Abgabeposition gemäß rechter Hälfte in Figur 4 bewegt wird, das Schlinggerät um die Klappachse 108 nach oben auf die Oberseite des Formtisches 1 zwecks Vollzugs des Verfahrensschritts e) in Figur 1 geschwenkt. Bei der zweiten Formeinheit 11, die komplementär von der Abgabeposition gemäß rechter Hälfte in Figur 4 in die Aufnahmeposition gemäß linker Hälfte in Figur 4 bewegt wird, findet für das Schlinggerät 107 genau die umgekehrte bzw. entgegengesetzte Bewegung in die Aufnahmeposition gemäß linker Hälfte in Figur 4 statt. Unmittelbar mit Verlassen der Aufnahmeposition durch die Formeinheit 10 wird der beginnenden Klappbewegung 61 des Schlinggeräts 107 noch gleichzeitig eine Schlingdrehung 53 um eine Drehachse 109 überlagert. Der Drehweg beträgt vorzugsweise 360 ° und entspricht dem Verfahrensschritt d) in Figur 1 zur Bildung des Schlingknotens 52. Die Drehachse 109 entspricht dabei der Schlingachse 51 in Figur 1. Dabei werden die gemäß Verfahrensschritt c) in Figur 1 erzeugten Endabschnitte 41 überkreuzt, womit der Teigstrang zur Schlinge 5 gemäß Figur 1 verarbeitet wird. Komplementär zur ersten Formeinheit 10 wird bei der zweiten Formeinheit 11, wenn diese aus der Abgabeposition gemäß rechter Hälfte in Figur 4 bewegt wird, das Schlinggerät 107 um die Klappachse 108 zurückgeklappt und vorzugsweise zusätzlich um die Dreh- bzw. Schlingachse 109 bzw. 51 zurückgedreht. Die Klappachse 108 und die Schlingachse 109 verlaufen gemäß Ausführungsbeispiel zueinander senkrecht. Die Drehgestellachse 92 verläuft senkrecht zur Klappachse 108 und meist schräg zu der ihre Lage ändernden Dreh- bzw. Schlingachse 109.

Zur Erhöhung der Produktionsgeschwindigkeit werden die Drehgestelldrehungen (vorzugsweise jeweils um 180 ° reversierend bzw. hin und her), das Klappen 61 um die Klappachse 108 und die Schlingdrehung 53 um die Dreh- bzw. Schlingachse 109 vorzugsweise gleichzeitig ausgeführt. Im Rahmen der Erfindung ist es auch möglich, die einzelnen Bewegungen nacheinander auszuführen. Indem sich die beiden Formeinheiten 10, 11 im Gegentakt zueinander einerseits an der Zuführeinrichtung 7 und andererseits an der Abführeinrichtung 12 (gleichzeitig) befinden, können letztere mit höherer Geschwindigkeit laufen und besser ausgenutzt werden. Dies wird durch die beiden gegenläufig arbeitenden, sich so ergänzenden Formsysteme 10,11 erreicht. Während der reversierenden Drehung 94 des Drehgestells 9 befinden sich auf den satellitenartig kreisenden Formeinheiten 10, 11 die jeweiligen Formtische bezüglich der Drehgestelldrehachse 92 in radial peripherer Lage.

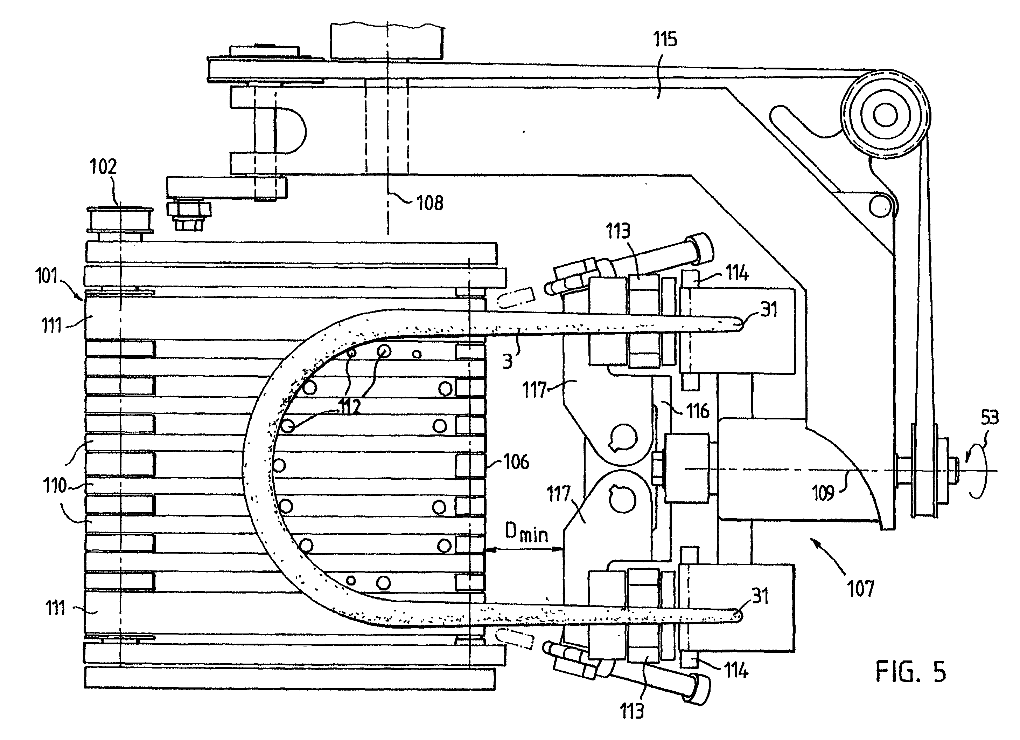

In Figur 5 ist eine Formeinheit in der Draufsicht dargestellt. Deren Formtisch befindet sich in einer unteren Endposition, so daß der U-förmige Teigstrang 3 mit seinen Schenkel-Endabschnitten mit maximaler Tiefe in das Schlinggerät 107 einragt. Die untere Endposition wie auch die obere Endposition des Formtisches 101 können durch (nicht gezeichnete) Endschalter markiert sein, welche den Schwenkzylinder 104 (vgl. Figur 4) entsprechend ansteuern. Der Formtisch 101 ist mit einer Mehrzahl nebeneinander verlaufender, einzelner Förderstreifen 110, 111 realisiert. Im Abstand der Schenkelendabschnitte 31 voneinander sind zwei Förderstreifen 111 angeordnet, die zum Tragen der Teigstrangschenkel mit einer breiteren Auflagefläche als die sonstigen Förderstreifen 110 versehen sind. Die Förderstreifen 110, 111 sind als kontiunierlich umlaufende Förderbänder ausgebildet. Ferner kann der Formtisch 101 über (nicht gezeichnete) Mittel zum Absenken oder Anheben der Schwenkachse 102 verfügen. Zwischen den Förderstreifen 110, 111 springen einzelne Haltestifte 112 vor, die zusammen einen Halterungssattel mit einer Biegung bilden, die der Biegung des Mittelteils 32 des U-förmigen Teigstrangs 3 (vgl. Figur 1, Verfahrensschritt b) entspricht. Die Halterungsstifte 112 sind zwischen den Förderstreifen 110, 111 mittels Versenkzylinder 124 ein- und ausfahrbar bzw. versenkbar angebracht. Im Verfahrensschritt e) gemäß Figur 1 bzw. in der Abgabestellung der zweiten Formeinheit 11 in der rechten Hälfte der Figur 4 werden die Haltestifte 112 eingefahren bzw. versenkt, um den fertiggestellten Brezelrohling 6 für die Übergabe an die Abführeinrichtung 12 freizugeben.

Gemäß Figur 5 befindet sich das Schlinggerät 107 in einem kleineren Abstand Dmin von der Endkante 106 des Formtisches 101, was auf dessen unterer Endposition zurückzuführen ist. Aufgrund dessen durchsetzen die Schenkel des U-förmigen Teigstrangs 3 je ein Greiforgan 113 sowie je einen Lichtschrankenerkennungssensor 114.

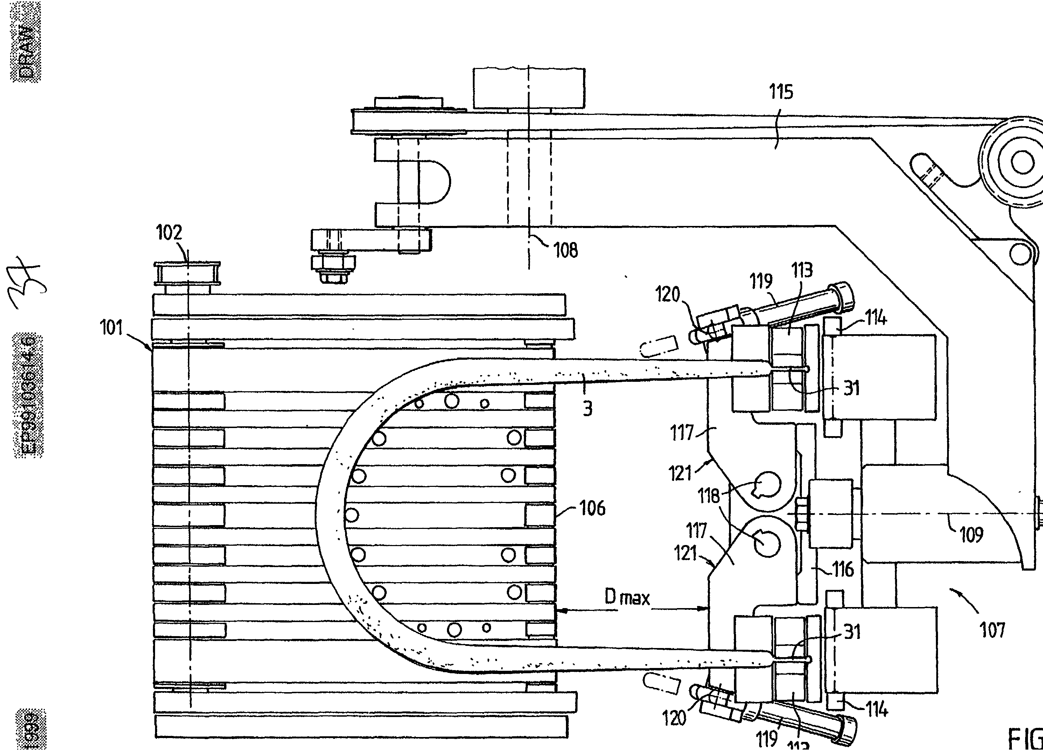

Gemäß Figur 6 ist der Abstand Dmax zwischen dem Schlinggerät 107 und der Endkante 106 des Formtisches 101 vergrößert, indem der Endkante 106 die Verschwenkung 103 nach oben über eine Ansteuerung des Schwenkzylinders 104 erteilt worden ist. Infolgedessen sind die Schenkelenden aus dem Bereich der Lichtsschrankenerkennungssensoren 114 herausgezogen. Deren resultierende Ausgangssignaländerung führt zu einer Ansteuerung eines (nicht gezeichneten) Antriebs bzw. Schließmechanismus der Greiforgane 113, so daß diese die Schenkelenden 31 zwischen sich einklemmen. Wird der Formtisch 101 mit seiner vorderen Endkante 106 noch etwas weiter nach oben verschwenkt, wird der U-förmige Teigstrang 3 etwas gedehnt, was später vorteilhaft die Bildung eines straffen, kompakten Schlingknotens 52 (vgl. Verfahrensschritt d in Figur 1) fördert. Denn durch die Verschwenkung des Formtisches 101 bis eine voreingestellte Endposition, markiert beispielsweise durch einen den Schwenkantrieb 104 ansteuemden Endschalter, liegt der U-förmige Teigstrang 3 straff am durch die Haltestifte 112 gebildeten Hängesattel an. Ein weiterer, damit erzielter Vorteil besteht darin, daß für unterschiedlich lange Teigstränge der Toleranzbereich vergrößert wird.

Mit der beschriebenen Methode der Teigstrangendenerkennung werden auch Ungenauigkeiten und Asymmetrien ausgeglichen, die möglicherweise beim Auflegen des Teigstrangs 3 in den Hänge- bzw. Halterungssattel entstehen können. Die beschriebene Endenerkennung führt gleichsam zu einer Feinausrichtung im Sinne einer symmetrischen U-Form, welche die vorher in der Richteinheit 8 erfolgte, gröbere U-Ausrichtung ergänzt und zudem sich unmittelbar danach eingeschlichene Ungenauigkeiten korrigiert.

Gemäß Figur 5 und 6 ist das Schlinggerät 107 auf einem Schwenkjoch 115 um die bereits oben genannten Schlingdrehachse 109 drehbar zur Ausführung von Schlingdrehungen 53 entsprechend Verfahrensschritt d) in Figur 1 drehbar gelagert. Um die Umklappbewegung 61 entsprechend Verfahrensschritt e) in Figur 1 ebenfalls auszuführen, kann das Schwenkjoch zusammen dem Schlinggerät 107 um die bereits genannte Klappachse 108 verschwenkt werden, welche es im quer zur Förderrichtung der Förderstreifen 110,111 durchsetzt. Es wird der Vorteil erzielt, daß die Verfahrensschritte d) und e) am Teigstrang mittels einer einzigen Formeinheit 10, 11 durchgeführt werden können, ohne daß der Strang von den Greiforganen losgelassen und in weitere Formeinheiten übergeben werden muß. Während des gesamten Schling- und Klappvorgangs (Verfahrensschritte d und e ) werden die Teigstrangenden 31, 41 nie von den Greiforganen losgelassen, sondern in einem Arbeitsgang fertiggeschlungen und umgeklappt. Danach kann der fertige Brezelrohling über entsprechende Ansteuerung der Förderstreifen 110, 111 mit den Teigstrang- bzw. Schenkelenden 31 auf der Oberseite des Mittelteils 32 an die Abführeinrichtung übergeben werden, was beim nächstliegenden Stand der Technik nicht gewährleistet ist. Da die Förderstreifen 110, 111 des Formtisches 101 unmittelbar an die Fördermittel 12a der Abführeinrichtung 12 anschließen, ist eine formschonende Übergabe des Brezelrohlings 6 gesichert. Entsprechendes gilt für das Förderband 71 der Zuführeinrichtung 7 in Verbindung mit dem Formtisch bzw. dessen Fördermittel 110, 111.

Gemäß Figur 5 und 6 sind die Greiforgane 113 über ein Haltegestell 116 miteinander verbunden und so auf dem Schwenkjoch 115 drehbar. Das Haltegestell 116 besitzt insbesondere zwei Schwenkflügel 117, die mit je einem der Greiforgane 113 fest verbunden und über Schwenkachsen 118 in einer Ebene verschwenkbar sind, die parallel zu der von Teigstrang-U-Schenkeln aufgespannten Ebene liegt. Ferner sind an den Außenseiten der Schwenkflügel 117 Schiebezylinder 119 mit ausfahrbaren Stößeln 120 befestigt. Die Erkennungssensoren 114 sind auf dem Sechwenkjoch unbeweglich fixiert.

Gemäß Figur 7 dient die Anordnung mit den die Greiforgane 113 tragenden Schwenkflügeln 117 und den daran befestigten Schiebezylindern 119 gemäß Verfahrensschritt c) in Figur 1 einen Ω-Teigstrang 4 zu erzeugen. Dazu sind die beiden Schwenkflügel 117 nach innen aufeinander zu geschwenkt, wobei ihre Schrägseitenabschnitte 121 aneinander in Anschlag gekommen sind. Die jeweils mitgenommen Greiforgane 113 richten dabei die Teigstrang-Endabschnitte 41 nach außen voneinander divergierend aus. Die Stößel 120 der Schiebezylinder 119 sind ausgefahren und drücken die U-Schenkel des Teigstrangs von außen nach innen aufeinander zu, so daß zwischen den beiden ein extrem "flaschenhalsartig" verengter Spalt 122 entsteht. Mit Erreichen dieser Form kann die Drehung des Greiforganverbandes oder -verbundes 113, 116, 117 um die Schlingdrehachse 109 beginnen (Verfahrensschritt d) ), wobei die Schlingdrehachse 109 bzw. 51 zeigerartig um die Drehgestelldrehachse 92 aufgrund der Satellitenbahn der jeweiligen Formeinheit 10, 11 geführt wird. Gleichzeitig kann auch die Umklappbewegung 61 gemäß Verfahrensschritt e) um die Klappachse 108 erfolgen, welche stets senkrecht zur Schlingdrehachse 109 und zur Drehgestelldrehachse 92 verläuft.

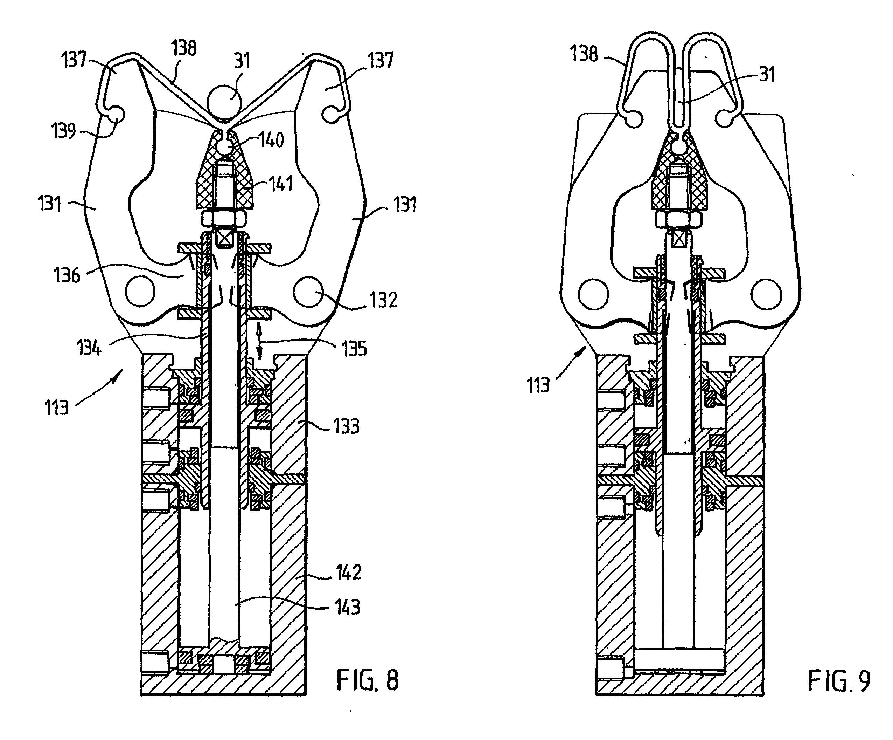

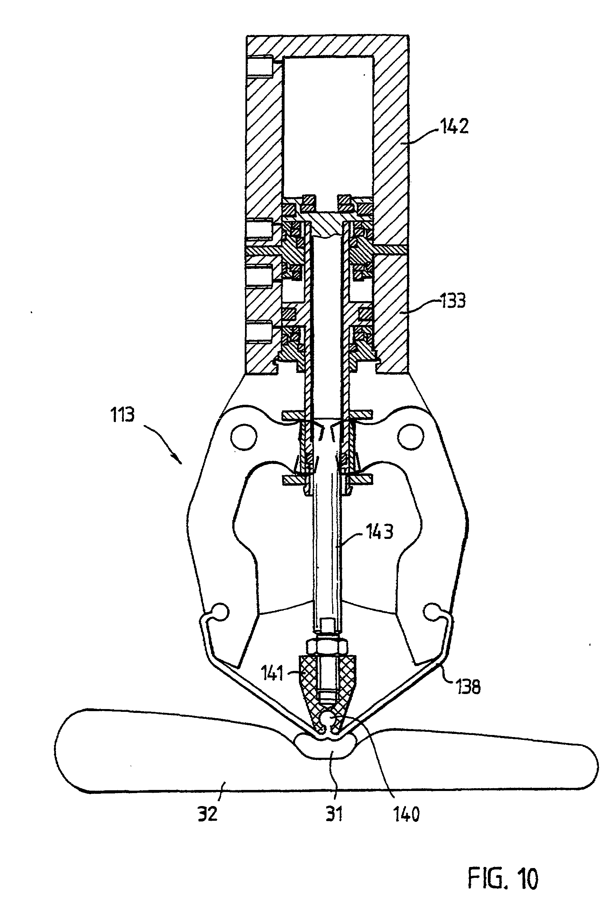

In Figur 8 und Figur 9 sind die Greiforgare 113 in Stellungen zur Aufnahme eines Teigstrangs 3 gezeigt. Das Greiforgan ist mit zwei durch Verschwenken auseinanderspreizbaren (Figur 8) und schließbaren (Figur 9) Klemmbacken 131 versehen. Sie sind jeweils um Schwenkachsen 132 (senkrecht zur Zeichenebene) auseinanderspreizbar und schließbar. Zur Herbeiführung der entsprechenden Bewegungen wird ein erster, vorzugsweise mit Druckluft betriebener Hubzylinder 133 verwendet, in dem einem verschiebbaren Außenkolben 134 lineare Stellbewegungen 135 erteilt werden können. Der obere Bereich des Außenkolbens 134 umklammert die inneren Enden 136 der Klemmbacken 131. Zur Herbeiführung einer Schließbewegung, wie in Figur 9 gezeigt, wird der Außenkolben 134 gegenüber der Stellung in Figur 8 nach unten bewegt (siehe Figur 9), wobei die Klemmbacken 131 nach innen aufeinander zugeschwenkt werden. Dabei wird der Teigstrang eingeklemmt. Die äußeren Klemmbackenenden 137 sind von einem gemeinsamen Gummistrang 138 umfaßt, der mit Wulstenden 139 in den Außenseiten der Klemmbacke 131 verankert ist. Damit der Gummistrang 138 für den Teigstrang 3 eine aufnahmefähige Vertiefung bilden kann, ist er zudem mit einer mittigen Wulstabzweigung 140 versehen, die in einem Stößel 141 eines zweiten, vorzugsweise mittels Druckluft angetriebenen Hubzylinders 142 verankert ist. Dessen Stellelement ist als den Außenkolben 134 des ersten Hubzylinders 133 innen durchsetzender Innenkolben 143 ausgeführt, welcher dem Stößel 141 lineare Hin- und Herbewegungen erteilen kann. Entsprechend kann der Gummistrang 138 mit seiner Wulstabzweigung 140 nach innen zur Aufnahme des Teigstrangs 3 eingezogen werden. Daraufhin - vgl. Figur 9 - können über den ersten Hubzylinder 133 die beiden Klemmbacken aufeinander zu geschwenkt werden, so daß der Teigstrang 3 gemäß Figur 9 eingeklemmt wird. Damit können die Verfahrensschritte c) - e) eingeleitet und einheitlich mit dem dargestellten Greiforganen durchgeführt werden. Im Verfahrensschritt e) kommt es nun darauf an, daß die Schenkelenden nicht nur präzise auf dem Mittelteil 32 positioniert, sondern auch daran angedrückt werden. Es ist für das Greiforgan nach der Phase "Aufnehmen" gemäß Figur 8 und der Phase "Zugreifen" gemäß Figur 9 "Ablegen mit Klemmbackenöffnung" einzuleiten. Dazu wird der erste Hubzylinder 133 mit seinem Außenkolben 134 in die Stellung wie nach Figur 8 versetzt, wobei die beiden Klemmbacken 131 nach außen gespreizt und in die Öffnungsstellung versetzt werden. Zudem und insbesondere gleichzeitig wird der zweite Hubzylinder 142 mit dem innenkolben 143 so betätigt, daß der Stößel 141 maximal nach außen verfahren wird. Dabei kann er das Auseinanderspreizen der Klemmbacken 131 einleiten und/oder mit unterstützen. Dies führt zu einer dachartigen Außenwölbung des Gummistrangs 138, wobei der die mittige Wulstabzweigung 140 aufweisende Strangabschnitt am weitesten nach außen vorspringt. Mittels dieses Abschnitts läßt sich das Teigstrangende 31 auf den Teigstrangmittelteil 32 aufdrücken, wie in Figur 10 gezeigt. Das Greiforgan 113 ist dabei von der oben offenen Stellung entsprechend linker Hälfte in Figur 1 um etwa 180 ° um die Klappachse 108 in die nach unten ausgestülpte Stellung gemäß Figur 10 bzw. rechter Hälfte in Figur 1 im Zuge der Gegentaktbewegungen der beiden Formeinheiten 10, 11 verstellt worden. Der Mittelteil bzw. Hauptteil 32 des Teigstrangs kann dabei unbewegt auf dem Formtisch 101 verbleiben, was eine gewichtsentlastende Schlingung ermöglicht. Zudem muß kein Abreißen oder Abschneiden der Teigstrangenden stattfinden.

Mit der Ausbildung und dem Betrieb mehrerer Formeinheiten 10, 11, die aufeinander im Gegentaktbetrieb bezogen sind, erreicht man Produktionsgeschwindigkeiten von zweitausend Brezeln pro Stunde und mehr.

### Bezugszeichenliste

- 1: Transport- und Förderrichtung
- 2: Teigstrang, quer
- 3: U-Teigstrang
- 31: Schenkelteile
- 32: Mittelteil
- 4: Ω-Teigstrang
- 41: Endabschnitte
- 5: Schlingteigstücke
- 51: Schlingachse
- 52: Knoten
- 53: Schlingdrehung
- 6: Brezelrohling
- 61: Umklappbewegung
- 62: Klappachse
- 7: Zuführeinrichtung
- 71: Förderband
- 72: horizontaler Abschnitt
- 73: Ausgang
- 74: Schrägabschnitt
- 75: Förderrolle
- 76: Förderrolle
- 77: Förderrolle
- 8: Richteinheit
- 81: Richtrad
- 82: Erkennungsensorik
- 83: Drehachse
- 84: Drehung
- 85: Aufsetz- und Abhebebewegung/Schwenkung
- 86: Antriebsmittel
- 87: Schwenkplatte
- 88: Schwenkachse
- 9: Drehgestell
- 91: Drehlagerung
- 92: Drehachse
- 93: Antriebsmotor
- 94: Drehrichtung
- 95: Stirnwandung
- 96: Tragwerk
- 10: erste Formeinheit
- 101: Formtisch
- 102: Schwenkachse
- 103: Verschwenkung
- 104: Schwenkzylinder
- 105: Seitenwandung
- 106: Endkante
- 107: Schlinggerät
- 108: Klappachse
- 109: Drehachse
- 11: zweite Formeinheit
- 110: Förderstreifen
- 111: Förderstreifen
- 112: Haltestifte
- 113: Greiforgan
- 114: Erkennungsensoren
- 115: Schwenkjoch
- 116: Haltegestell
- 117: Schwenkflügel
- 118: Schwenkachse
- 119: Schiebezylinder
- 12: Abführeinrichtung
- 12a: Förderband
- 120: Stößel
- 121: Schrägseitenabschnitte
- 122: verengter Spalt
- 123: Schwenkbewegung
- 131: Klemmbacken
- 132: Schwenkachse
- 133: Zylinder
- 134: Außenkolben
- 135: Stellbewegung
- 136: innere Klemmbacken
- 137: äußere Klemmbackenenden
- 138: Gummistrang
- 139: Wulstende
- 14: Vorformstation
- 140: Wulstabzweigung
- 141: Stößel
- 142: zweiter Zylinder
- 143: Innenkolben
- 15: Auswurfförderband
- 151: Förderrichtung
- 152: Auswurfspalt

- Dmin: Abstand

## Patentansprüche

1. Anordnung zur maschinellen Brezelherstellung, mit mehreren, zur Verarbeitung eines Teigstrangs (3) zu einem Brezelrohling (6) ausgebildeten Formeinheiten (10,11), die auf einem gemeinsamen Verfahrgestell angeordnet und darüber jeweils zum Ausgang (73) einer Teigstrang-Zuführeinrichtung (7) oder zum Eingang einer Brezelrohling-Abführeinrichtung (12) bewegbar sind, wobei das Verfahrgestell mittels eines Antriebsmotors (93) zwischen der Zuführ- und Abführeinrichtung (7,12) geführt ist, und die Formeinheiten (10,11) auf dem Verfahrgestell derart angeordnet sind, daß bei Verstellung einer ersten der Fomleinheiten (10,11) in eine Abgabeposition unmittelbar am Eingang der Abführeinrichtung (12) gleichzeitig eine zweite der Formeinheiten (10,11) in eine Aufnahmeposition unmittelbar am Ausgang (73) der Zuführeinrichtung (7) verstellt ist, **dadurch gekennzeichnet, dass** die Zuführeinrichtung (7) mit einer Strang-Längenmeßeinheit (81,82) und einer Strangbiegeeinheit (81) versehen ist, die zum symmetrischen Ausrichten der Teigstränge (3) gemäß einer U-Form miteinander in Wirkverbindung stehen.

2. Anordnung nach Anspruch 1, dadurch gekennzeichnet, daß die Formeinheiten (10,11) im oder auf dem Fahrgestell im wesentlichen in einer Ebene liegend und/oder einander vorzugsweise symmetrisch, insbesondere punktsymmetrisch, gegenüberliegend angeordnet sind.

3. Anordnung nach Anspruch 1 oder 2, wobei das Verfahrgestell als um eine Drehachse (92), die zwischen den Formeinheiten angeordnet ist, rotierbares Drehgestell (9) ausgebildet ist, dadurch gekennzeichnet, daß die Drehachse (92) des Drehgestells (9) vertikal und/oder senkrecht zu einer etwaigen gemeinsamen Ebene der Formeinheiten (10,11) und/oder zu einer von der jeweiligen Formeinheit (10,11) für die Teigstrang-Endabschnitte (31,41) realisierten Schling- und/oder Umklappachse (109,108) verläuft.

4. Anordnung nach einem der vorangehenden Ansprüche, dadurch gekennzeichnet, daß die Zu- und Abführeinrichtungen (7,12) sowie die Formeinheiten (10,11) mit jeweils in der Aufnahme- oder Abführposition aneinander anschließenden Förderbändern (71; 110,111; 12a) realisiert sind.

5. Anordnung nach einem der vorangehenden Ansprüche, gekennzeichnet durch ein zwischen der Zuführeinrichtung (7) und der jeweils an dieser anstehenden Formeinheit (10,11) angeordnetes Teigstrang-Auswerforgan (15), das zu seiner Betätigung mit der Strang-Längenmeßeinheit (81,82) gekoppelt ist.

6. Zuführeinrichtung verwendet als Biege- und Längenmeßeinrichtung für die Anordnung nach einem der vorangehenden Ansprüche, **gekennzeichnet durch** ein Förderband (71), auf dessen Oberfläche mit quer aufstehender Drehachse (83) ein motorisch drehbares Richtrad (81) so angeordnet und abhebbar (85) ist, daß geförderte Teigstränge (2) daran unter Erhalt einer U-Form in Anlage kommen und mit Abheben (85) des Richtrades (81) zur Weiterbeförderung freigegeben sind, und daß dem Richtrad (81) ein Winkelgeber zur Erfassung seines Drehweges (x), und dem U-förmig gebogenen Teigstrang eine Sensorik (82) zur separaten Erkennung je eines seiner beiden Enden (31) zugeordnet sind, wobei der Antriebsmotor des Richtrades (81) von einer Steuereinrichtung kontrolliert ist, die eingangsseitig mit dem Winkelgeber und der Sensorik (82) verbunden ist.

7. Einrichtung nach Anspruch 6, dadurch gekennzeichnet, daß im Bereich des Richtrades (81) das Förderband (71) in Richtung zu seinem Ausgang (73) abfallend und/oder geneigt verläuft

## Claims

1. Arrangement for the machine production of pretzels, having a plurality of shaping units (10, 11) which are formed to process a dough strand (3) into a pretzel blank (6) and which are disposed on a common trolley and are movable thereon respectively to the output (73) of a dough strand supply device (7) or the input of a pretzel blank discharge device (12), wherein the trolley is guided by means of a drive motor (93) between the supply and discharge device (7, 12), and the shaping units (10, 11) are so disposed on the trolley that upon displacement of a first shaping unit (10, 11) into a transfer position directly at the input of the discharge device (12), simultaneously a second shaping unit (10, 11) is displaced into a receiving position directly at the output (73) of the supply device (7), characterised in that the supply device (7) is provided with a strand length measuring unit (81, 82) and a strand bending unit (81) is provided, which are in active engagement with one another in order to align the dough strands (3) symmetrically in a U-shape.

2. Arrangement according to claim 1, characterised in that the shaping units (10, 11) are disposed opposite one another in or on the trolley substantially in one plane and/or preferably symmetrically, in particular point-symmetrically, opposite one another.

3. Arrangement according to claim 1 or 2, wherein the trolley is formed as a bogie (9) rotatable about an axis (92), which is disposed between the shaping units, characterised in that the axis of rotation (2) of the bogie (9) extends vertically and/or perpendicular to a roughly common plane of the shaping units (10, 11) and/or to a looping and/or fold-over axis (109, 108) realised by the respective shaping unit (10, 11) for the dough strand end sections (31, 41).

4. Arrangement according to one of the preceding claims, characterised in that the supply and discharge devices (7, 12) and the shaping units (10, 11) are realised with conveyor belts (71; 110, 111; 12a) respectively abutting one another in the receiving or discharge position.

5. Arrangement according to one of the preceding claims, characterised by a dough strand ejection element (15) which is disposed between the supply device (7) and the shaping unit (10, 11) respectively abutting the same and which is coupled to the strand length measuring device (81, 82) in order to be actuated.

6. Supply device used as a bending and length measuring device for the arrangement according to one of the preceding claims, characterised by a conveyor belt (71), on whose surface, with a transversely projecting axis of rotation (83) a motor-rotatable straightening wheel (81) is so arranged and liftable (85) that conveyed dough strands (2), retaining a U-shape, come into abutment therewith and upon lifting (85) of the straightening wheel (81) are released for further conveying, and in that the straightening wheel (81) is assigned a phase angle sensor for detecting its distance of rotation (x), and the U-shaped dough strand is allocated a sensor device (82) for separate detection of each of its two ends (31), wherein the drive motor of the straightening wheel (81) is controlled by a control device, whose end is connected to the phase angle sensor and the sensor device (82).

7. Device according to claim 6, characterised in that in the region of the straightening wheel (81) the conveyor belt (71) extends in a descending and/or in an inclined manner towards its output (73).

## Revendications

1. Dispositif pour la fabrication mécanique de bretzels, comportant plusieurs unités de mise en forme (10, 11) qui sont conçues pour transformer un cordon de pâte (3) en une ébauche de bretzel (6) et qui sont disposées sur un châssis mobile commun et peuvent, par son intermédiaire, être déplacées respectivement en direction de la sortie (73) d'un dispositif (7) d'amenée des cordons de pâte ou en direction de l'entrée d'un dispositif (12) d'évacuation des ébauches de bretzel, et dans lequel le châssis mobile est conduit au moyen d'un moteur d'entraînement (93) entre les dispositifs d'amenée et d'évacuation (7, 12) et les unités de mise en forme (10, 11) sont disposées sur le châssis mobile d'une manière telle, que lors du déplacement de l'une des unités de mise en forme (10, 11) jusque dans une position de délivrance directement à l'entrée du dispositif d'évacuation (12), une seconde unité de mise en forme (10, 11) est amenée simultanément dans une position de réception directement à la sortie (73) du dispositif d'amenée (7), caractérisé en ce que le dispositif d'amenée (7) est pourvu d'une unité (81, 82) de mesure des longueurs des cordons et d'une unité (81) de cintrage des cordons, qui coopèrent pour orienter symétriquement les cordons de pâte (3) suivant la forme d'un U.

2. Dispositif selon la revendication 1, caractérisé en ce que les unités de mise en forme (10, 11) sont disposées dans ou sur le châssis mobile en étant essentiellement situées dans un plan et/ou en étant situées en vis-à-vis, de préférence d'une manière symétrique, en particulier selon une symétrie par rapport à un point.

3. Dispositif selon la revendication 1 ou 2, dans lequel le châssis mobile est conçu sous la forme d'un châssis rotatif (9) pouvant tourner autour d'un axe de rotation (92) qui est disposé entre les unités de mise en forme, caractérisé en ce que l'axe de rotation (92) du châssis rotatif (9) s'étend verticalement et/ou perpendiculairement à un éventuel plan commun des unités de mise en forme (10, 11) et/ou à un axe d'enroulement et/ou de rabattement (109, 108) réalisé par l'unité respective de mise en forme (10, 11) pour les tronçons d'extrémité (31, 41) du cordon de pâte.

4. Dispositif selon l'une des revendications précédentes, caractérisé en ce que les dispositifs d'amenée et d'évacuation (7, 12) ainsi que les unités de mise en forme (10, 11) sont réalisées avec des bandes transporteuses (71; 110; 111; 12a) qui se raccordent entre elles respectivement dans la position de réception ou dans la position d'évacuation.

5. Dispositif selon l'une des revendications précédentes, caractérisé par un organe (15) d'éjection des cordons de pâte, qui est disposé entre le dispositif d'amenée (7) et l'unité de mise en forme (10, 11) jouxtant respectivement ce dispositif et qui est accouplé, pour son actionnement, à l'unité (81, 82) de mesure des longueurs des cordons de pâte.

6. Dispositif d'amenée utilisé en tant que dispositif de cintrage et de mesure de longueur pour le dispositif selon l'une des revendications précédentes, caractérisé par une bande transporteuse (71), sur la surface de laquelle une roue d'orientation (81), à entraînement motorisé en rotation, est disposée et peut être soulevée (85), avec son axe de rotation (83) se dressant transversalement, de telle sorte que des cordons de pâte entraînés (2) viennent s'appliquer contre cette roue en prenant une forme en U et, avec le soulèvement (85) de la roue d'orientation (81), soient libérés pour l'entraînement ultérieur, et en ce qu'un capteur angulaire servant à détecter la course de rotation (x) de la roue d'orientation (81) est associé à cette dernière et un système de détection (82) servant à repérer séparément chacune des deux extrémités (31) du cordon de pâte cintré en forme de U est associé à ce cordon de pâte, le moteur d'entraînement de la roue d'orientation (81) étant contrôlé par un dispositif de commande qui est relié, côté entrée, au capteur angulaire et au système de détection (82).

7. Dispositif selon la revendication 6, caractérisé en ce que dans la zone de la roue d'orientation (81), la bande transporteuse (71) est disposée de manière à descendre et/ou à être en position inclinée en direction de sa sortie (73).
